(19) Europäisches Patentamt

European Patent Office

Office européen des brevets

(11) **EP 1 460 399 A2**

(12) **EUROPÄISCHE PATENTANMELDUNG**

(43) Veröffentlichungstag:
    **22.09.2004 Patentblatt 2004/39**

(51) Int Cl.⁷: **G01L 1/22**

(21) Anmeldenummer: **04006497.4**

(22) Anmeldetag: **18.03.2004**

(84) Benannte Vertragsstaaten:
    **AT BE BG CH CY CZ DE DK EE ES FI FR GB GR
    HU IE IT LI LU MC NL PL PT RO SE SI SK TR**
    Benannte Erstreckungsstaaten:
    **AL LT LV MK**

(30) Priorität: **19.03.2003 DE 10312288**

(71) Anmelder: **GTM GASSMANN THEISS
    MESSTECHNIK GMBH
    64404 Bickenbach (DE)**

(72) Erfinder: **Gassmann, Helmut, Dr.-Ing.
    64342 Seeheim-Jugenheim (DE)**

(74) Vertreter: **Katscher, Helmut, Dipl.-Ing.
    Katscher Habermann Patentanwälte
    Fröbelweg 1
    64291 Darmstadt (DE)**

(54) **Kraft- und/oder Momenten-Messaufnehmer**

(57)    Ein Kraft- und/oder Momenten-Messaufnehmer weist einen Verformungskörper (1) auf, der mit mehreren, jeweils zu Messbrückenschaltungen zusammengeschalteten Dehnungsmesselementen (5a, 5b, 5c, 5d, 6, 7, 8, 9) bestückt ist. Der Verformungskörper (1) ist ein axialsymmetrisch zu einer Krafteinleitungsachse (z) ausgebildeter Hohlkörper. Er weist gleichmäßig am Umfang verteilte, gegenüber den übrigen Querschnittsbereichen verdünnte Querschnittsbereiche auf, die mit Dehnungsmesselementen (5a, 5b, 5c, 5d) für eine Schubspannungsmessung bestückt sind. Der Verformungskörper (1) weist jeweils zwischen den verdünnten Querschnittsbereichen mit Dehnungsmesselementen (5a, 5b, 5c, 5d) für eine Axialkraftmessung bestückte, verdickte Querschnittsbereiche (4) auf.

Fig.1

**Beschreibung**

Die Erfindung betrifft einen Kraft- und/oder Momenten-Messaufnehmer mit einem Verformungskörper, der mit mehreren, jeweils zu Messbrückenschaltungen zusammengeschalteten Dehnungsmesselementen bestückt ist.

Derartige Kraft- und/oder Momenten-Messaufnehmer sind in unterschiedlichen Ausführungsformen bekannt. Als Dehnungsmesselemente werden üblicherweise Dehnungsmessstreifen verwendet, an denen bei einer Längenänderung in Folge der Verformung des Verformungskörpers eine elektrische Widerstandsänderung auftritt, die in einer Messbrückenschaltung erfasst wird und ein zur Bestimmung der Kräfte bzw. Momente dienendes Signal liefert.

Auf dem Gebiet der Mehrkomponentenmesstechnik ist ein öfter wiederkehrendes Problem, dass einem vergleichsweise kleinen zu messenden Drehmoment eine ebenfalls zu messende große Kraft überlagert ist. Als Beispiel hierzu diene die Untersuchung von Schraubverbindungen, bei der der Zusammenhang zwischen Schraubenanzugsmoment und Schraubenkraft gemessen wird.

Stand der Technik ist hier beispielsweise der Einsatz von bevorzugt drei zentrisch um die Mittelachse angeordneten Messaufnehmern, die in Normalrichtung die Kraft messen und tangential über Querkraftmessung das Drehmoment bestimmen.

Voraussetzung für eine fehlerfreie Querkraftmessung ist allerdings eine für jeden Kraftaufnehmer oben und unten exakt fluchtende Krafteinleitung. Sobald diese Voraussetzung verletzt wird, entsteht ein Kräftepaar und damit eine Querkraft, die genau wie die vom zu messenden Drehmoment hervorgerufene Querkraft ein Dehnungsmessstreifen-Signal hervorruft. Da die Dehnungsmessstreifen-Messstelle zwischen beiden Querkraftanteilen nicht unterscheiden kann, entsteht hier ein sogenannter Übersprechfehler, der unter ungünstigen Kraft/Moment-Verhältnissen in die Größenordnung des zu messenden Drehmomentes kommen kann und dieses unter Umständen sogar übersteigt.

Es ist weiterhin Stand der Technik, diesen Übersprechfehler durch Kalibrieren zu ermitteln und dann bei der Messung durch Einfügung von Korrektionen zu kompensieren. Dazu ist allerdings Voraussetzung, dass die Kraftflüsse durch die Aufnehmer im späteren Einsatz den gleichen Verlauf wie bei der Kalibrierung haben. Dies ist aber in der Regel nicht der Fall und wird auch bei der Messung nicht erkannt, so dass die Korrektion dann falsch ist und die Messunsicherheit wesentlich größer wird als angenommen.

Aufgabe der Erfindung ist es daher, einen Kraft- und/oder Momenten-Messaufnehmer der eingangs genannten Gattung so auszubilden, dass der Übersprechfehler zwischen Kräften und Momenten weitestgehend reduziert wird.

Diese Aufgabe wird erfindungsgemäß dadurch gelöst, dass der Verformungskörper ein axialsymmetrisch zu einer Krafteinleitungsachse ausgebildeter Hohlkörper ist, der gleichmäßig am Umfang verteilte, gegenüber den übrigen Querschnittsbereichen verdünnte Querschnittsbereiche aufweist, die mit Dehnungsmesselementen für eine Schubspannungsmessung bestückt sind.

Da die Messstellen für die Schubspannungsmessung, die der Bestimmung des Drehmoments dienen, weitestgehend außerhalb der verdickten Querschnittsbereiche liegen, durch die der Kraftfluss erfolgt, wird das Problem des Übersprechens bei geeigneter Dimensionierung unter ein zulässiges Maß reduziert. Der Kraft- und/oder Momenten-Messaufnehmer ist daher geeignet, trotz der Übertragung und ggf. Messung verhältnismäßig hoher Kräfte unabhängig davon die Momentenmessung durchzuführen.

Der Kraft- und/oder Momenten-Messaufnehmer kann vorteilhafterweise auch dann eingesetzt werden, wenn die Kraftmessung in Richtung der Krafteinleitungsachse sind im Kraft- und/oder Momenten-Messaufnehmer selbst, sondern beispielsweise in einem Kraft-Transferaufnehmer erfolgt. Die zu messende Kraft wird dann durch den Kraft- und/oder Momenten-Messaufnehmer nur hindurchgeleitet; sie beeinflusst die Messung von Momenten und Querkräften im Kraft- und/oder Momenten-Messaufnehmer nicht, so dass damit die exakte Richtung der mit dem Transferaufnehmer gemessenen Kraft und deren Krafteintrittspunkt bestimmt werden können.

Gemäß einer vorteilhaften Ausgestaltung des Erfindungsgedankens ist vorgesehen, dass der Verformungskörper jeweils zwischen verdünnten Querschnittsbereichen mit Dehnungsmesselementen für eine Axialkraftmessung bestückte, verdickte Querschnittsbereiche aufweist. Damit erfolgt auch die Messung der Kraft in Richtung der Krafteinleitungsachse in dem Kraft- und/oder Momenten-Messaufnehmer.

Gemäß einer bevorzugten Ausführungsform weist der Verformungskörper eine zylindrische Bohrung auf und wird mindestens teilweise von ebenen äußeren Flächen begrenzt. Die verdünnten Querschnittsbereiche zur Aufnahme der Dehnungsmesselemente für eine Schubspannungsmessung entstehen hierbei an denjenigen an denjenigen Stellen, an denen der Abstand zwischen der zylindrischen Bohrung und einer ebenen äußeren Fläche am geringsten ist.

Stattdessen oder zusätzlich hierzu kann auch vorgesehen sein, dass der Verformungskörper an seiner Außenseite vorspringende achsparallele Pfosten aufweist, die die verdickten Querschnittsbereiche für die Kraftübertragung bilden.

In Weiterbildung des Erfindungsgedankens ist vorgesehen, dass der Verformungskörper teilweise einen dünnwandigen Hohlzylinder bildet, der mit den Dehnungsmesselementen für die Schubspannungsmessung bestückt ist. Die verdickten Querschnittsbereiche können an der Außenseite des Hohlzylinders einstückig angeformte achsparallele Pfosten sein.

Eine vorteilhafte Verwendung eines solchen Kraft- und/oder Momenten-Messaufnehmer besteht darin, eine Axialkraft und ein um die Krafteinleitungsachse drehendes Drehmoment zu messen.

Eine andere, vorteilhafte Verwendung besteht darin, den Kraft- und/oder Momenten-Messaufnehmer als Krafteinleitungskörper für ein Kraftmesselement einzusetzen, beispielsweise einen Kraft-Transferaufnehmer.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Hierbei sind mit x, y und z die drei Achsen eines rechtwinkligen Koordinatensystems bezeichnet, wobei die x-Achse die Krafteinleitungsachse für die jeweils größte aufzunehmende Kraft Fz ist. Die Kräfte in Richtung der Achsen x und y werden als Querkräfte Fx und Fy bezeichnet. Die jeweils um die Achsen x, y und z drehenden Momente sind mit Mx, My und Mz bezeichnet. In der Zeichnung zeigt:

Fig. 1 eine axiale Draufsicht auf einen Sechs-Komponentenaufnehmer,

Fig. 2 eine Seitenansicht des Aufnehmers nach Fig. 1,

Fig. 3 einen Sechs-Komponentenaufnehmer gemäß einer anderen Ausführungsform in einer axialen Ansicht,

Fig. 4 den Aufnehmer nach Fig. 3 in einer Seitenansicht,

Fig. 5 einen Kraft-Momentenaufnehmer in axialer Ansicht,

Fig. 6 den Aufnehmer gemäß Fig. 5 in einer Seitenansicht,

Fig. 7 in einer Draufsicht einen weiteren Kraft-Momentenmessaufnehmer in axialer Ansicht,

Fig. 8 den Aufnehmer nach Fig. 7 in einer Seitenansicht in Verbindung mit einem Kraft-Transferaufnehmer,

Fig. 9 in einer Seitenansicht und teilweise im Schnitt eine Sechs-Komponenten-Messplattform mit einem darin eingesetzten Drei-Komponentenaufnehmer,

Fig. 10 einen Schnitt längs der Linie X-X in Fig. 9 und

Fig. 11 in räumlicher Darstellungsweise eine Einzelheit bei XI in Fig. 9.

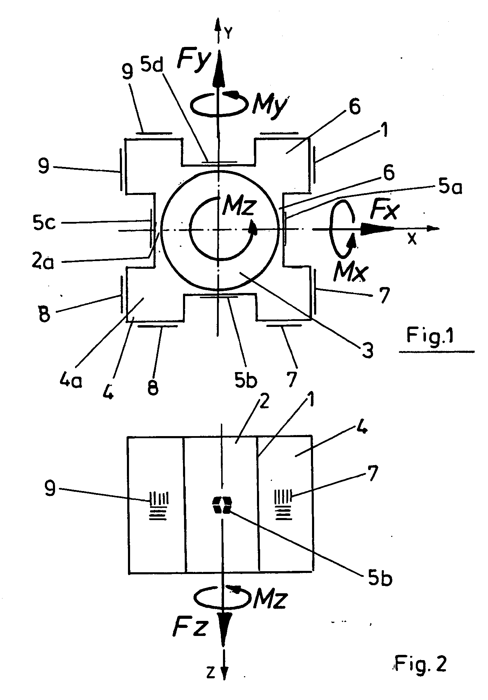

Der in den Fig. 1 und 2 dargestellte Sechs-Komponenten-Messaufnehmer dient zur Messung der in Richtung der Krafteinleitungsachse z der eingeleiteten Hauptkraft Fz und des um die Krafteinleitungsachse z drehenden Moments Mz, wobei gleichzeitig die Querkräfte Fx und Fy sowie die Momente Mx und My gemessen werden. Der Messaufnehmer weist einen Verformungskörper 1 auf, der teilweise aus einem dünnwandigen Hohlkörper 2 besteht, der eine zylindrische Bohrung 3 aufweist. An der Außenseite des Hohlkörpers 2 springen zur Achse z parallele prismatische Pfosten oder Stäbe 4 vor. Der Hohlkörper 2 bildet vier gegenüber den Pfosten 4 verdünnte Querschnittsbereiche 2a. Die Pfosten 4 bilden verdickte Querschnittsbereiche 4a. An den verdünnten Querschnittsbereichen 2a sind an der Außenseite Dehnungsmessstreifen 5a, 5b 5c und 5d appliziert. An den einander gegenüberliegenden Seitenflächen der Pfosten 4 sind Dehnungsmessstreifen 6, 7, 8 und 9 appliziert. Die Dehnungsmessstreifen 5a-5c und 6-9 sind jeweils in der üblichen Weise zu Messbrücken zusammengeschaltet. Der Aufnehmer gemäß den Fig. 1 und 2 dient zur Messung einer Axialkraft Sz und des um die Achse z drehenden Moments Mz. Gleichzeitig können die Querkräfte Fx und Fy gemessen werden, die die Größe von 2-30 % von Fz haben. An den prismatischen Pfosten 4 sind die Dehnungsmessstreifen 6-9 als Längs-Dehnungsmessstreifen appliziert, so dass sich insgesamt vier Vollbrücken für Fz ergeben, mit denen auch die Biegemomente Mx und My gemessen werden können.

Der beschriebene Aufnehmer kann in der dargestellten Form alle sechs Komponenten (drei Kräfte, drei Momente) messen. Die Signale der Komponenten errechnen sich aus den Einzelsignalen der Vollbrücken der Dehnungsmessstreifen 6, 7, 8 und 9 sowie 5a, 5b, 5c und 5d wie folgt:

$$\text{Signal Fz} = 6+7+8+9$$

$$\text{Signal Mz} = 5a+5b+5c+5d$$

$$\text{Signal Fx} = 5b-5d$$

$$\text{Signal Mx} = (6+7)-(8+9)$$

$$\text{Signal Fy} = 5a-5c$$

$$\text{Signal My} = (7+8)-(6+9).$$

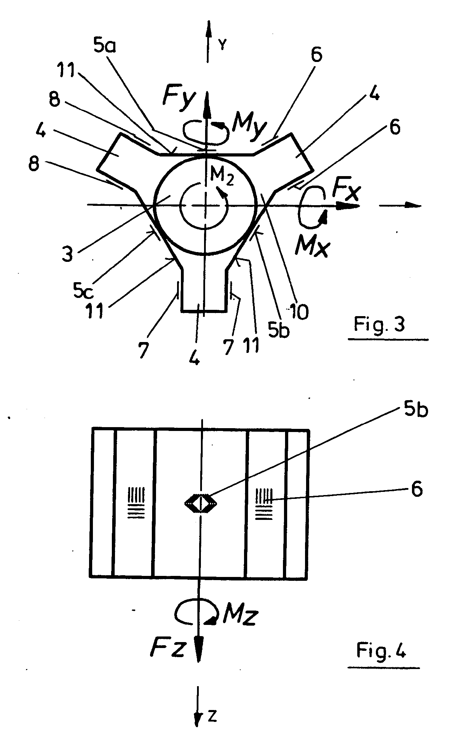

Der Kraft-Momenten-Messaufnehmer gemäß den Fig. 3 und 4 unterscheidet sich von dem vorher beschriebenen Ausführungsbeispiel dadurch, dass sein Verformungskörper 10, der die zylindrische Bohrung 3 aufweist, drei am Umfang verteilte prismatische Pfosten 4 aufweist, die an ihren Seitenflächen die Dehnungsmessstreifen 6, 7 und 8 tragen. Zwischen den Pfosten 4 wird der Verformungskörper 10 von ebenen äußeren Flächen 11 begrenzt. Jeweils an den dünnsten Stellen zwischen der Bohrung 3 und der zugeordneten Fläche 11 sind die Dehnungsmessstreifen 5a, 5b und 5c appliziert.

Auch bei diesem Aufnehmer können die Dehnungsmessstreifen 6, 7, 8 und 5a, 5b, 5c in einer Brückenschaltung so geschaltet werden, dass insgesamt drei Messbrücken in z-Richtung und drei Messbrücken in Querrichtung entstehen. Aus diesen sechs Messbrücken lassen sich dann gemäß den Regeln der Mechanik die sechs Komponenten Fx, Fy, Fz und Mx, My, Mz bestimmen.

Die Signale der sechs Komponenten (drei Kräfte, drei Momente) errechnen sich aus den Einzelsignalen der Vollbrücken der Dehnungsmessstreifen wie folgt:

$$\text{Signal } Fz = 6+7+8$$

$$\text{Signal } Mz = 5a+5b+5c$$

$$\text{Signal } Fx = 5a+5c-5b$$

$$\text{Signal } Mx = 7-(6+8)$$

$$\text{Signal } Fy = 5c-5b$$

$$\text{Signal } My = 6-8$$

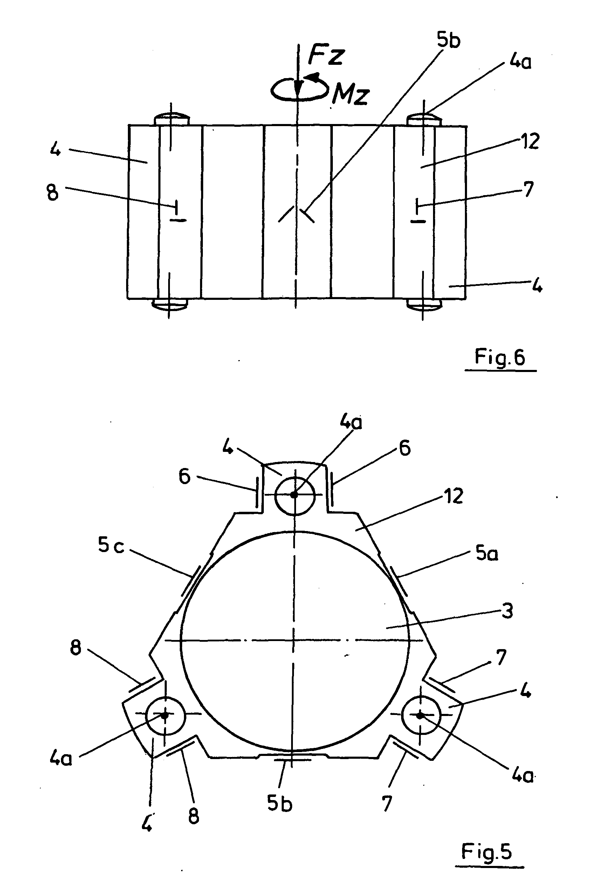

Auch der in den Fig. 5 und 6 dargestellte Kraft-Moment-Aufnehmer weist einen als Hohlkörper ausgeführten Verformungskörper 12 auf mit einer Formgebung, die an die für beide Messkanäle unterschiedlichen Forderungen angepasst ist. Der Aufnehmer dient dazu, eine in Richtung der Krafteinleitungsachse z wirkende Kraft Fz und ein Moment Mz um die Achse z zu messen. Da der grundsätzliche Aufbau den Fig. 3 und 4 ähnelt, werden die gleichen Bezugszeichen wie dort verwendet.

Die Dehnungsmessstreifen 5a, 5b und 5c an den jeweils dünnsten Stellen des Verformungskörpers 12 dienen der Schubspannungsmessung und damit der Messung des Moments Mz. Die Dehnungsmessstreifen 6, 7 und 8 an den verdickten Pfosten 4 dienen der Messung der Kraft Fz. Da die Messstellen für Fz und die Messstellen für Mz an völlig unterschiedlichen Positionen mit unterschiedlich messtechnisch relevanten Verformungsquerschnitten angebracht sind, ist einerseits eine voneinander unabhängige Dimensionierung der unterschiedlichen Messquerschnitte möglich; andererseits wird das Problem des Übersprechens bei geeigneter Dimensionierung unter ein zulässiges Maß reduziert.

Die unabhängige Dimensionierung der Messquerschnitte ermöglicht insbesondere die Einstellung gleicher Messkanalempfindlichkeiten für beide Komponenten Fz und Mz.

Die beschriebene Wirkungsweise der gewählten Formgebung lässt sich wie folgt erklären: Die Kraft Fz teilt sich zu etwa gleichen Anteilen auf die drei äußeren Krafteinleitungspunkte 4a der Pfosten 4 auf. Der Querschnitt an diesen verdickten Stellen des Verformungskörpers 12 ist so dimensioniert, dass sich ein maximales Messsignal bei linearem Verformungsverhalten ergibt. Die senkrecht und waagrecht zur Kraftrichtung z angeordneten Dehnungsmessstreifen 6, 7 und 8 erfassen die kraftproportionale Dehnung.

Die sich auf die Dehnungsmessstreifen 5a, 5b und 5c an den Schubspannungs-Messstellen übertragende Dehnung ist vergleichsweise sehr klein und wird durch die unter 45° angeordneten Schubkraft-Dehnungsmessstreifen 5a, 5b und 5c ohnehin nur in zweiter Ordnung erfasst. In gleicher Weise ist der Querschnitt an den verdünnten Messstellen für die Dehnungsmessstreifen 5a, 5b und 5c des Verformungskörpers 12 so bemessen, dass sich auch hier ein maximales Messsignal ergibt, in diesem Fall zur Messung des Drehmoments Mz.

Da das Produkt aus Wanddicke und Schubspannung (bei konstanter Höhe) konstant ist, ist die sich auf Grund des zu messenden Drehmoments Mz einstellende Schubspannung an den verdünnten Messstellen, die die Dehnungsmessstreifen 5a, 5b und 5c tragen, um ein über das Querschnittsverhältnis frei wählbares Vielfaches höher als an den verdickten Pfosten 4 des Verformungskörpers 12.

Bei entsprechender Dimensionierung führen die beschriebenen Verhältnisse dazu, dass weder die Kraft Fz die Messung des Moments Mz noch das Moment Mz die Messung der Kraft Fz unzulässig beeinflusst und dass beide Messkanäle auf maximales Signal optimiert werden können.

Diese beschriebenen Verhältnisse gelten auch für die anderen dargestellten Ausführungsbeispiele.

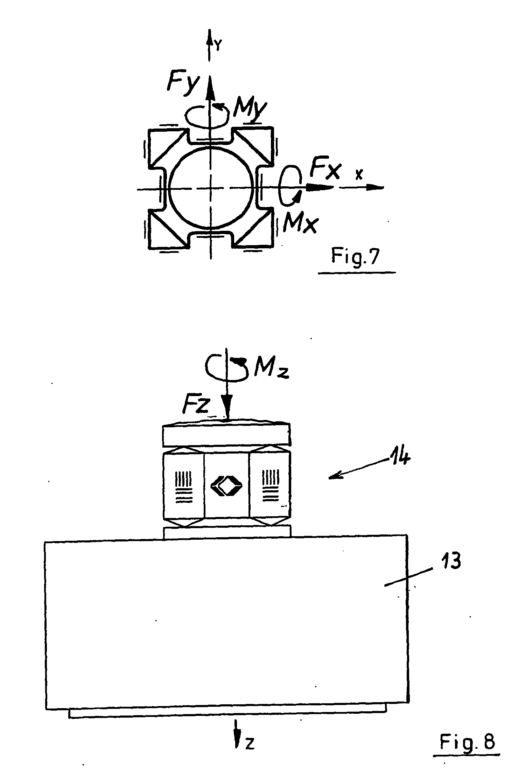

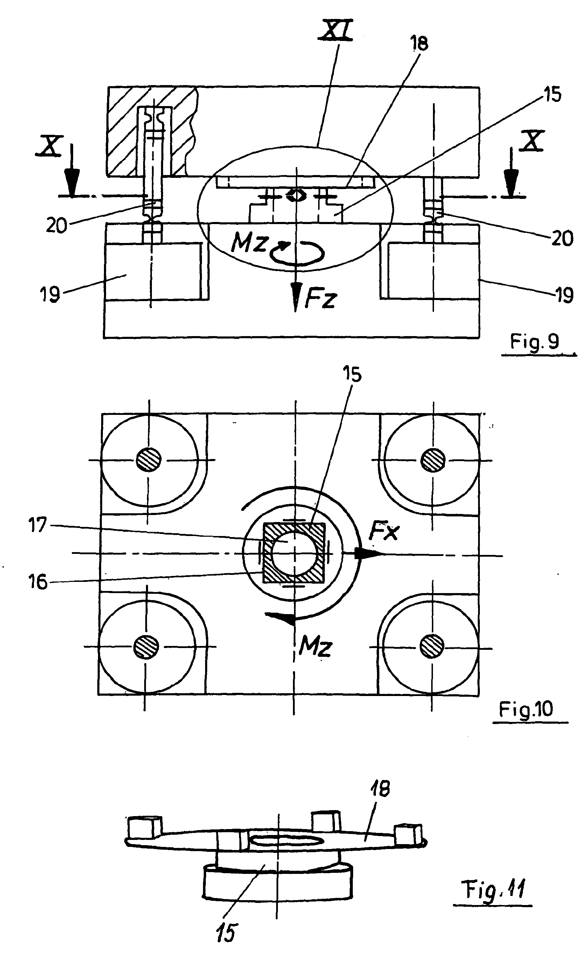

In den Fig. 7 und 8 ist die Anwendung eines Aufnehmers von ähnlichem Aufbau wie der Aufnehmer gemäß den Fig. 1 und 2 in Kombination mit einem Kraft-Transferaufnehmer 13 gezeigt. Mit Hilfe des zentriert aufgesetzten Fünf-Komponenten-Aufnehmers 14 zur Messung von Fx, Fy und Mx, My, Mz kann die exakte Richtung der mit dem Transferaufnehmer 13 gemessenen Kraft Fz und deren Krafteintrittspunkt bestimmt werden. Es entsteht so ein Aufnehmersystem, das eine aufzubringende Totlast ersetzt, wobei sich auch der Vorteil ergibt, dass die gesamte Kraftwirkung nach Größe und Richtung bestimmt ist.

Die Fig. 9, 10 und 11 zeigen die Anwendung eines Drei-Komponenten-Aufnehmers 15 zur Messung der Querkräfte Fx und Fy und des Drehmoments Mz in einer Sechs-Komponenten-Messplattform. Der Verformungskörper 16 des Aufnehmers 15 ist hierbei eine Säule mit quadratischem Grundriss und einer zentrischen zylindrischen Bohrung 17.

Der Aufnehmer 15 hat die Vorteile, dass er außerordentlich flach baut und auf Grund seines geschlossenen Kastenprofils besonders biegesteif ist. Hieraus resultieren sehr geringe Messwege in den beiden Querrichtungen x und y.

Wie in Fig. 11 in Einzelheiten gezeigt ist, kann der Aufnehmer 15 über eine Membran 18 in z-Richtung entkoppelt werden, so dass er keine Rückwirkung auf die einzelnen Aufnehmer 19 hat, die jeweils über Pendelstützen 20 die Kraft Fz und die Biegemomente Mx und My messen.

Hieraus ergibt sich eine messtechnisch sehr vorteilhafte Kombination, die darüber hinaus den Vorteil hat, dass sie sehr einfach zu montieren ist. Die gesamte Zentrierung der Messplattform erfolgt über vier exakte Bohrungen der Oberplatte und eine zentrale Zentrierbohrung zur Zentrierung des Querkraft-/Momentenaufnehmers.

Anhand der beschriebenen Ausführungsbeispiele wurde dargestellt, dass vorzugsweise drei oder vier verdickte Messstellen am Umfang des Kraft- und/oder Momenten-Messaufnehmers ausgebildet sind. Es versteht sich, dass auch eine beliebige andere Zahl von stabil angeordneten Messstellen vorgesehen werden kann.

Wie insbesondere beim Beispiel nach den Fig. 5 und 6 zu erkennen ist, kann die Verdünnung des Querschnitts durch Abarbeitung einer durchgehenden Fläche, beispielsweise durch Fräsen oder Schleifen, hergestellt werden. Stattdessen ist es auch möglich, diese Verdünnung des Querschnitts durch ein bzw. mehrere Sacklochbohrungen mit flachem Boden herzustellen.

**Patentansprüche**

1. Kraft- und/oder Momenten-Messaufnehmer mit einem Verformungskörper, der mit mehreren, jeweils zu Messbrückenschaltungen zusammengeschalteten Dehnungsmesselementen bestückt ist, **dadurch gekennzeichnet, dass** der Verformungskörper (1, 10, 12) ein axialsymmetrisch zu einer Krafteinleitungsachse (z) ausgebildeter Hohlkörper ist, der gleichmäßig am Umfang verteilte, gegenüber den übrigen Querschnittsbereichen verdünnte Querschnittsbereiche aufweist, die mit Dehnungsmesselementen (5a, 5b, 5c, 5d) für eine Schubspannungsmessung bestückt sind.

2. Kraft- und/oder Momenten-Messaufnehmer nach Anspruch 1, **dadurch gekennzeichnet, dass** der Verformungskörper (1, 10, 12) jeweils zwischen verdünnten Querschnittsbereichen mit Dehnungsmesselementen (5a, 5b, 5c, 5d) für eine Axialkraftmessung bestückte, verdickte Querschnittsbereiche (4) aufweist.

3. Kraft- und/oder Momenten-Messaufnehmer nach Anspruch 1 oder 2, **dadurch gekennzeichnet, dass** der Verformungskörper (10, 12, 16) eine zylindrische Bohrung (3) aufweist und mindestens teilweise von ebenen äußeren Flächen (11) begrenzt wird.

4. Kraft- und/oder Momenten-Messaufnehmer nach Anspruch 1 oder 2, **dadurch gekennzeichnet, dass** der Verformungskörper (1, 10, 12) an seiner Außenseite vorspringende achsparallele Pfosten (4) aufweist.

5. Kraft- und/oder Momenten-Messaufnehmer nach Anspruch 1-4, **dadurch gekennzeichnet, dass** der Verformungskörper (1) teilweise einen dünnwandigen Hohlkörper (2) bildet, der mit den Dehnungsmesselementen (5a, 5b, 5c, 5d) für die Schubspannungsmessung bestückt ist.

6. Kraft- und/oder Momenten-Messaufnehmer nach Anspruch 5, **dadurch gekennzeichnet, dass** die verdickten Querschnittsbereiche an der Außenseite des Hohlkörpers (2) einstückig angeformte achsparallele Pfosten (4) sind.

7. Kraft- und/oder Momenten-Messaufnehmer nach Anspruch 1, **dadurch gekennzeichnet, dass** der Verformungskörper (16) eine Säule mit quadratischem Grundriss und einer zentrischen zylindrischen Bohrung (17) ist.

8. Verwendung eines Kraft- und/oder Momenten-Messaufnehmers gemäß einem der Ansprüche 1-7 zum messen einer Axialkraft (Fz) und eines um die Krafteinleitungsachse (z) drehenden Drehmoments (Mz).

9. Verwendung eines Kraft- und/oder Momenten-Messaufnehmers nach einem der Ansprüche 1-7 als Krafteinleitungskörper für ein Kraftmesselement (13).

Fig.1

Fig. 2

Fig. 3

Fig. 4

Fig.6

Fig.5

Fig. 7

Fig. 8

XI

18

15

X

X

20

20

19

19

Mz

Fz

Fig. 9

15

17

16

Fx

Mz

Fig. 10

18

15

Fig. 11

15